# EUROPÄISCHE PATENTSCHRIFT

(11) **EP 1 491 787 B1**
(45) Veröffentlichungstag und Bekanntmachung des Hinweises auf die Patenterteilung: **27.09.2006**
(21) Anmeldenummer: 04014287.9
(22) Anmeldetag: 18.06.2004
(51) Int. Cl.: F16D 48/06

(54) **Verfahren und Vorrichtung zur Steuerung einer Kupplung**
Method and device for controlling a clutch
Procédé et dispositif pour contrôler un embrayage

(30) Priorität: 23.06.2003 DE 10328017
(43) Veröffentlichungstag der Anmeldung: 29.12.2004
(73) Patentinhaber: LuK Lamellen und Kupplungsbau Beteiligungs KG, 77815 Bühl (DE)
(72) Erfinder: Reibold, Ekkehard, Dr., 77933 Lahr (DE); Eggert, Thomas, Dr., 76131 Karlsruhe (DE); Martin, Jens, 76547 Sinzheim-Kartung (DE)

(56) Entgegenhaltungen:
- DE-A- 10 032 366
- DE-A- 10 116 705
- DE-A- 10 236 540
- DE-A- 10 237 793
- US-A- 6 086 514

## Beschreibung

Die Erfindung betrifft ein Verfahren zum Adaptieren einer in einer elektronischen Steuereinrichtung abgelegten Beziehung zwischen einem von einer Kupplung übertragbaren Moment und einer Steuergröße zum Steuern einer Betätigungseinrichtung der Kupplung, aus der das von der Kupplung übertragbare Moment berechenbar ist. Die Erfindung betrifft weiter eine Vorrichtung zur Durchführung des Verfahrens.

In der DE 102 36 540 A1 wird ein gattungsgemäßes Verfahren und eine Vorrichtung zum Ansteuern einer Kupplung eines elektronischen Kupplungsmanagements und/oder eines automatisierten Schaltgetriebes vorgeschlagen, bei dem ein Greifpunkt der Kupplung in Abhängigkeit der Kupplungstemperatur bestimmt wird und bei der Ansteuerung der Kupplung berücksichtigt wird.

Bei einer automatisierten mittels einer Betätigungseinrichtung betreibbaren Kupplung definiert die Kupplungsmomentenkennlinie das übertragbare Kupplungsmoment bei gegebener Position des Betätigungsglieds. Es ist möglich, dass sich nach einem Energieeintrag in die Kupplung und einer infolge einer Erwärmung des Kupplungsaggregats auftretenden thermisch-mechanischen Verformung desselben das Betriebsverhalten der Kupplung verändert. Bei Betriebszuständen, bei denen die Kupplung mit einem großen Energieeintrag belastet wird, beispielsweise bei schlupfender Kupplung, zum Beispiel bei einer Anfahrt unter Volllast am Berg oder bei Schaltungsvorgängen, kann es zu einer thermisch-mechanischen Verformung des Kupplungsaggregats kommen. Der Verformungsgrad hängt von konstruktiven Details, vor allem von der Geometrie des Schwungrads, der Anpressplatte und des Kupplungsdeckels, ab. Durch die Deformation verschiebt sich zum einen die Nullposition der Tellerfederzungen bei geschlossener Kupplung und damit auch der Stellweg für die Betätigungseinrichtung zum Betätigen der Kupplung. Zum anderen ändert sich auch der Reibwert der Kupplung und damit die Kupplungscharakteristik. Diese Effekte führen zu einem veränderten Betriebsverhalten der Kupplung. Um Komforteinbußen oder gar sicherheitskritische Situationen bei Betrieb der Kupplung zu vermeiden, müssen die vorgenannten Effekte durch eine Anpassung der Kupplungsmomentenkennlinie an das aktuelle Betriebsverhalten der Kupplung kompensiert werden, damit die Position des Betätigungsglieds zum Betätigen der Kupplung zur Übertragung eines bestimmten Kupplungsmoments mit hinreichender Genauigkeit bestimmt werden kann. Dabei müssen gegebenenfalls nicht nur thermische sondern auch andere Effekte, wie beispielsweise Verschleiß und Fertigungstoleranzen ausgeglichen werden. Die Anpassung der Kupplungsmomentenkennlinie an das veränderte Betriebsverhalten der Kupplung durch thermisch-mechanische Verformung des Kupplungsaggregats kann prinzipiell mit Hilfe eines Finite-Elemente-Modells berechnet werden. Diese Berechnungen sind jedoch sehr speicher- und rechenzeitaufwendig, so dass eine Online-Berechnung im Fahrzeug derzeit nicht möglich ist.

Der Erfindung liegt die Aufgabe zugrunde, ein Verfahren und eine Vorrichtung der eingangs beschriebenen Art derart weiterzuentwickeln, dass auf einfache Weise ein sicherer Betrieb der Kupplung möglich ist.

Der das Verfahren betreffende Teil der Aufgabe wird erfindungsgemäß gelöst durch ein Verfahren zum Adaptieren einer in einer elektronischen Steuereinrichtung abgelegten Beziehung zwischen einem von einer Kupplung übertragbarem Moment und einer Steuergröße zum Steuern einer Betätigungseinrichtung der Kupplung, welche Kupplung in einem automatisierten Fahrzeugantriebsstrang im Kraftfluss zwischen einem Antriebsmotor und einem Schaltbetriebe angeordnet ist, bei welchem Verfahren aus mindestens einem Adaptionsparameter das von der Kupplung übertragbare Moment berechnet und der Steuergröße als aktualisiertes übertragbares Moment zugeordnet wird, wobei als ein Adaptionsparameter eine Verschiebung eines Tastpunktes der Kupplung verwendet wird, wobei die Verschiebung des Tastpunktes in Abhängigkeit von der in die Kupplung eingebrachten Reibleistung näherungsweise berechnet wird und sich aus dem Produkt einer Proportionalitätskonstanten multipliziert mit der Größe der in die Kupplung eingebrachten Reibleistung und multipliziert mit einem Zeitfilterungsglied, ergibt. Vorteilhafterweise wird erfindungsgemäß bei Betriebszuständen, die zu einem veränderten Betriebsverhalten der Kupplung führen, beispielsweise aufgrund einer thermisch-mechanischen Verformung des Kupplungsaggregats, zum Beispiel bei einem Schlupfbetrieb aufgrund eines großen Energieeintrags in die Kupplung oder beispielsweise zur Berücksichtigung eines Verschleißes der Kupplung oder zur Berücksichtigung von Fertigungstoleranzen, die Berechnung der Kupplungsmomentenkennlinie durch bestimmte Adaptionsparameter an das aktuelle Betriebsverhalten der Kupplung angepasst. Als Adaptionsparameter können beispielsweise der Tastpunkt und der Reibwert der Kupplung verwendet werden.

Vorteilhafterweise wird erfindungsgemäß der Adaptionsparameter in Abhängigkeit von der in die Kupplung eingebrachten Reibleistung näherungsweise berechnet. Bei einem Schlupfbetrieb der Kupplung erfolgt beispielsweise aufgrund der Gleitreibung an den Kupplungsbelegen ein großer Energieeintrag pro Zeiteinheit in das Kupplungsaggregat, der als Reibleistung bezeichnet werden kann. Dabei bildet sich ein Temperaturfeld mit einem großen räumlichen Temperaturgradienten in der Kupplung aus. Die in die Kupplung eingebrachte Reibleistung führt zu einer kurzfristigen reversiblen Verschiebung der Tellerfederzungen-Nullposition bei geschlossener Kupplung aufgrund einer thermisch-mechanischen Verformung des Kupplungsaggregats insbesondere von Topfungseffekten an dem Schwungrad und/oder an der Anpressplatte. Der reibleistungsabhängige Anteil der Verschiebung der Tellerfederzungen-Nullposition bei geschlossener Kupplung führt zu einer Veränderung im Stellweg der Kupplung und damit, wie bereits oben dargestellt, zu einer Verschiebung des Tastpunkts der Kupplung. Die Tastpunktverschiebung aufgrund einer kurzfristigen reibleistungsabhängigen Verschiebung der Tellerfeder-Nullposition kann näherungsweise linear abhängig von der Reibleistung an der Kupplung beschrieben werden. Dabei tritt dieser Anteil der Tastpunktverschiebung zeitverzögert nach Eintrag der Reibleistung in die Kupplung auf. Die zeitliche Verzögerung der Zustandsänderung kann erfindungsgemäß durch einen Zeitfilter, beispielsweise durch eine PT1-Filterung, berücksichtigt werden. Danach ergibt sich die reibleistungsabhängige Verschiebung des Tastpunkts aus dem Produkt einer Proportionalitätskonstanten, die durch Fahrzeugmessungen bestimmt werden kann, multipliziert mit der Größe der in die Kupplung eingebrachten Reibleistung und multipliziert mit einem Zeitfilterungsglied. Dadurch wird erreicht, dass der reibleistungsabhängige Anteil der kurzfristigen Verschiebung der Tellerfederzungen-Nullposition bei geschlossener Kupplung näherungsweise berechnet werden kann.

Vorteilhafterweise wird als Adaptionsparameter die Veränderung des Tastpunkts der Kupplung verwendet. Bei einer thermisch-mechanischen Verformung des Kupplungsaggregats, beispielsweise aufgrund einer Erwärmung bei schlupfend betriebener Kupplung, führt dies zu einer Verschiebung der Nullposition der Tellerfederzungen bei geschlossener Kupplung. Dadurch verändert sich der Stellweg der Betätigungseinrichtung zum Betätigen der Kupplung. Im Kupplungskennliniendiagramm, in dem das übertragbare Kupplungsmoment als Funktion des Stellwegs der Betätigungseinrichtung zum Betätigen der Kupplung wiedergegeben ist, entspricht dies einer Parallelverschiebung der Kupplungsmomentenkennlinie auf der Stellwegachse. Der Stellweg des Betätigungsglieds beginnt bei geschlossener Kupplung in der so genannten Schnüffelposition, in der der Nullabgleich der Wegmessung in der Betätigungseinrichtung der Kupplung durchgeführt wird. Als Tastpunkt der Kupplung kann der Stellweg der Betätigungseinrichtung in einem vorbestimmten Punkt der Kennlinie, der einem bestimmten von der Kupplung übertragbaren Moment entspricht, bezeichnet werden. Die Verschiebung der Nullposition der Tellerfederzungen bei geschlossener Kupplung entspricht somit einer bestimmten Tastpunktverschiebung. Unter Berücksichtigung der Veränderung des Tastpunkts der Kupplung kann die Kupplungskennlinie an das veränderte Betriebsverhalten der Kupplung angepasst werden. Dies hat den Vorteil, dass die Kupplungskennlinie auf einfache Weise an das veränderte Betriebsverhalten der Kupplung adaptiert werden kann. Dadurch kann der Komfort bei der Steuerung der automatischen Betätigung der Kupplung verbessert und sicherheitskritische Situationen vermieden werden.

In einer weiteren vorteilhaften Ausgestaltung des Verfahrens wird der Adaptionsparameter in Abhängigkeit eines Anstiegs der Temperatur der Kupplung während eines bestimmten Zeitintervalls näherungsweise berechnet. Bei einem Schlupfbetrieb der Kupplung ist die Verschiebung der Tellerfederzungen-Nullposition bei geschlossener Kupplung aufgrund einer thermisch-mechanischen Verformung des Kupplungsaggregats von dem Energieeintrag in die Kupplung abhängig. Dabei wird eine langfristige thermisch-mechanische Verformung des Kupplungsaggregats aufgrund einer Änderung der mittleren Temperatur der Kupplung, insbesondere der Anpressplatte, berücksichtigt. Unter diesen Voraussetzungen kann die Tastpunktverschiebung aufgrund einer Verschiebung der Tellerfederzungen-Nullposition näherungsweise linear abhängig von der Temperaturdifferenz aus dem Anstieg der mittleren Temperatur des Kupplungsaggregats während eines bestimmten Zeitintervalls bestimmt werden. Danach ergibt sich näherungsweise die Veränderung des Tastpunkts als Produkt aus einer Proportinalitätskonstanten, die durch Fahr-zeugmessungen bestimmt werden kann, multipliziert mit der Temperaturdifferenz aus dem Anstieg der mittleren Temperatur des Kupplungsaggregats während des bestimmten Zeitintervalls. Das Zeitintervall kann beispielsweise so gewählt werden, dass der mittlere Temperaturanstieg der Kupplung seit dem letzten so genannten Schnüffelvorgang berücksichtigt wird, bei dem ein Nullabgleich der Wegmessung des Betätigungsglieds durchgeführt wird. Auf diese Weise kann die Veränderung des Tastpunkts der Kupplung auf einfache Weise näherungsweise berechnet und die Kupplungskennlinie durch eine Berücksichtigung der Veränderung des Tastpunkts des Betätigungsglieds der Kupplung angepasst werden.

Nach einer vorteilhaften Weiterentwicklung des Verfahrens wird der Adaptionsparameter in Abhängigkeit von der in die Kupplung eingebrachten Reibleistung näherungsweise berechnet. Bei einem Schlupfbetrieb der Kupplung erfolgt beispielsweise aufgrund der Gleitreibung an den Kupplungsbelegen ein großer Energieeintrag pro Zeiteinheit in das Kupplungsaggregat, der als Reibleistung bezeichnet werden kann. Dabei bildet sich ein Temperaturfeld mit einem großen räumlichen Temperaturgradienten in der Kupplung aus. Die in die Kupplung eingebrachte Reibleistung führt zu einer kurzfristigen reversiblen Verschiebung der Tellerfederzungen-Nullposition bei geschlossener Kupplung aufgrund einer thermisch-mechanischen Verformung des Kupplungsaggregats insbesondere von Topfungseffekten an dem Schwungrad und/oder an der Anpressplatte. Der reibleistungsabhängige Anteil der Verschiebung der Tellerfederzungen-Nullposition bei geschlossener Kupplung führt zu einer Veränderung im Stellweg der Kupplung und damit, wie bereits oben dargestellt, zu einer Verschiebung des Tastpunkts der Kupplung. Die Tastpunktverschiebung aufgrund einer kurzfristigen reibleistungsabhängigen Verschiebung der Tellerfeder-Nullposition kann näherungsweise linear abhängig von der Reibleistung an der Kupplung beschrieben werden. Dabei tritt dieser Anteil der Tastpunktverschiebung zeitverzögert nach Eintrag der Reibleistung in die Kupplung auf. Die zeitliche Verzögerung der Zustandsänderung kann erfindungsgemäß durch einen Zeitfilter, beispielsweise durch eine PT1-Filterung, berücksichtigt werden. Danach ergibt sich die reibleistungsabhängige Verschiebung des Tastpunkts aus dem Produkt einer Proportionalitätskonstanten, die durch Fahrzeugmessungen bestimmt werden kann, multipliziert mit der Größe In erfinderischer Weiterentwicklung des Verfahrens wird der Adaptionsparameter in Abhängigkeit des Anstiegs der Temperatur der Kupplung während eines bestimmten Zeitintervalls und in Abhängigkeit von der in die Kupplung eingebrachten Reibleistung näherungsweise berechnet. Um beide Effekte, sowohl den kurzfristig wirkenden reibleistungsabhängigen Anteil als auch den langfristig wirkenden energieabhängigen Anteil der Verschiebung der Tellerfederzungen-Nullposition bei geschlossener Kupplung berücksichtigen zu können, wird erfindungsgemäß die Gesamtverschiebung des Tastpunkts der Kupplung als Summe der Verschiebungen aufgrund der vorgenannten energieabhängigen und der reibleistungsabhängigen Tastpunktsverschiebungen berechnet. Dies hat den Vorteil, dass bei der Anpassung der Kupplungskennlinie unter Verwendung der Tastpunktverschiebung als Adaptionsparameter sowohl der langfristig wirkende Energieeintrag als auch der kurzfristig wirkende Reibleistungseintrag in die Kupplung erfasst werden. Dadurch kann die Anpassung der Kupplungskennlinie an das veränderte Betriebsverhalten der Kupplung aufgrund thermischmechanischer Verformung, beispielsweise bei schlupfendem Betrieb der Kupplung, erheblich verbessert werden. Dies führt zu einem komfortableren und sicheren Betrieb der Kupplung.

Nach einer weiteren erfinderischen Ausgestaltung des Verfahrens wird als Adaptionsparameter der Reibwert der Kupplung verwendet. Der Reibwert der Kupplung ist eine insbesondere temperatur- und verschleißabhängige Betriebsgröße. Die reibleistungsabhängige Verschiebung der Tellerfederzungen-Nullposition kann nur sehr aufwendig aus Fahrzeugmessungen bestimmt werden. Erfindungsgemäß kann das reibleistungsbedingte veränderte Betriebsverhalten der Kupplung durch eine Reibwertadaption abgebildet werden. Die Reibwertadaption beschreibt die Veränderung der Steigung der Kupplungsmomentenkennlinie im Kennliniendiagramm aufgrund reibleistungsbedingter kurzfristiger thermisch-mechanische Verformung des Kupplungsaggregats. Durch eine Anpassung des Reibwerts der Kupplung kann die Kupplungskennlinie an das aktuelle Betriebsverhalten der Kupplung adaptiert werden und eine aufwendige Bestimmung der reibleistungsabhängigen Verschiebung der Tellerfederzungen-Nullposition vermieden werden.

In erfinderischer Weiterentwicklung des Verfahrens wird der Adaptionsparameter durch Auswertung des mechanischen Momentengleichgewichts an der Kupplung bestimmt. Grundlage der erfindungsgemäßen Bestimmung des Reibwerts der Kupplung ist die Auswertung des mechanischen Momentengleichgewichts an der Kupplung. Berücksichtigt man hierbei das Motormoment und das Motorträgheitsmoment im aktuellen Betriebszustand und geht des Weiteren von einem übertragbaren Kupplungsmoment entsprechend der nicht adaptierten Kupplungsmomentenkennlinie aus, kann in Bezug auf diese eine Abweichung in Gestalt eines Momentenfehlers aufgrund des veränderten aktuellen Betriebsverhaltens der Kupplung durch die vorgenannten Effekte berechnet werden. Die Größe des Momentenfehlers ergibt sich aus der Differenz des von dem Motor erzeugten Antriebsmoments und dem Motorträgheitsmoment im aktuellen Betriebszustand sowie dem aus der nicht adaptierten Kupplungsmomentenkennlinie entnommenen übertragbaren Kupplungsmoment bei vorgegebener Position des Stellglieds der Betätigungseinrichtung der Kupplung. Mit der berechneten Größe des Momentenfehlers kann der Reibwert der Kupplung an das aktuelle Betriebsverhalten der Kupplung schrittweise adaptiert werden und die Kupplungsmomentenkennlinie auf diese Weise an das aktuelle Betriebsverhalten der Kupplung angepasst werden.

Nach einem weiteren erfinderischen Gedanken werden als Adaptionsparameter ein kurzfristiger Reibwert der Kupplung und ein langfristiger Reibwert der Kupplung verwendet. Bei einer thermisch-mechanischen Verformung des Kupplungsaggregats können die oben dargestellten kurzfristig wirkenden Effekte und die langfristig wirkenden Effekte, die zu einem veränderten Betriebsverhalten und damit zu einer veränderten Kupplungsmomentenkennlinie führen, unterschieden werden. Während die kurzfristigen Effekte aufgrund eines Temperaturverlaufs mit großen kurzfristigen Temperaturgradienten in der Kupplung, z. B. bei einem Schlupfbetrieb der Kupplung, auftreten, beruhen die langfristigen Effekte auf einer Änderung der mittleren Temperatur der Kupplung Beide Effekte überlagern sich z.B. bei einem Schlupfbetrieb der Kupplung und bewirken beispielsweise eine Verschiebung der Tellerfederzungen-Nullposition. Um das veränderte Betriebsverhalten der Kupplung vollständig adaptieren zu können müssen beide Effekte berücksichtigt werden. Dies wird erreicht, indem mit einem kurzfristigen Reibwert das veränderte Betriebsverhalten der Kupplung aufgrund der genannten kurzfristigen und langfristigen Effekte und mit einem vorbestimmten langfristigen Reibwert ausschließlich die langfristigen Effekte schrittweise adaptiert werden.

In einer weiteren erfinderischen Ausgestaltung des Verfahrens wird bei einem Schlupfbetrieb der Kupplung der kurzfristige Reibwert als Adaptionsparameter verwendet sowie bei Betriebszuständen außerhalb des genannten Betriebszustands der langfristige Reibwert als Adaptionsparameter verwendet. Grundlage der Reibwertadaption ist die oben beschriebene Auswertung des mechanischen Momentengleichgewichts an der Kupplung. Erfindungsgemäß wird, während des Schlupfbetriebs der Kupplung, durch eine schrittweise Anpassung des kurzfristigen Reibwert die Kupplungsmomentenkennlinie adaptiert, wenn der in oben beschriebene Weise berechnete Momentenfehler betragsmäßig größer oder gleich einem ersten vorbestimmten Mindestmomentenfehler ist. Eine Anpassung des langfristigen Reibwerts erfolgt ebenfalls während des Schlupfbetriebs der Kupplung, wenn der in oben beschriebene Weise berechnete Momentenfehler betragsmäßig größer oder gleich einem zweiten vorbestimmten Mindestmomentenfehler ist, wobei der zweite vorbestimmte Mindestmomentenfehler größer als der erste vorbestimmte Mindestmomentenfehler ist. Bei einem Schlupfbetrieb der Kupplung überlagern sich kurzfristige und langfristige Effekte, die zu Abweichungen der Kupplungsmomentenkennlinie führen. Dabei können die vorbestimmten Mindestmomentenfehler in vorteilhafter Weise so gewählt werden, dass während eines Schlupfbetriebs der Kupplung durch eine alleinige Adaption mit dem kurzfristigen Reibwert die kurzfristigen und langfristigen Abweichungen der Kupplungsmomentenkennlinie, beispielsweise aufgrund einer Verschiebung der Tellerfederzungen-Nullposition bei Anfahr- oder Schaltungsvorgängen, ausgeglichen werden können. Außerhalb eines Schlupfbetriebs der Kupplung bestimmen die langfristigen Effekte das veränderte Betriebsverhalten der Kupplung. Die kurzfristigen Effekte wirken sich nicht mehr aus. Bei nichtschlupfendem Betrieb der Kupplung erfolgt daher die Anpassung der Kupplungsmomentenkennlinie vorteilhafterweise nur durch den langfristigen Reibwert.

Nach einer weiteren vorteilhaften Ausgestaltung des Verfahrens wird der Übergang zwischen der Phase mit der Verwendung des kurzfristigen Reibwerts der Kupplung als Adaptionsparameter und der Phase mit der Verwendung des langfristigen Reibwerts der Kupplung als Adaptionsparameter schrittweise kontinuierlich gestaltet. In der Steuereinrichtung zur Steuerung der Betätigungseinrichtung der Kupplung wird zur Berechnung der aktuellen Kupplungskennlinie grundsätzlich der langfristige Reibwert verwendet. Tritt ein Kupplungsschlupf auf, beispielsweise während eines Anfahr- oder Schaltungsvorgangs wird die Berechnung der aktuellen Kupplungsmomentenkennlinie unter der Verwendung des kurzfristigen Reibwerts als Adaptionsparameter schrittweise adaptiert. Die Rückverschiebung der Tellerfederzungen nach einer Rückbildung der Temperaturgradienten der Kupplung, wenn der Betriebszustand mit Schlupfbetrieb der Kupplung beendet ist, kann durch eine Adaption der Kupplungskennlinie mit dem kurzfristigen Reibwert nicht ausgeglichen werden. Daher wird die Rückverschiebung der Tellerfederzungen der Kupplung nach beendetem Schlupfbetrieb durch einen rampenförmigen Übergang von dem kurzfristigen Reibwert als Adaptionsparameter zum langfristigen Reibwert als Adaptionsparameter abgebildet.

In einer weiteren vorteilhaften Ausgestaltung des Verfahrens werden als Adaptionsparameter der Tastpunkt der Kupplung und der Reibwert der Kupplung verwendet. Erfindungsgemäß werden die Veränderung des Tastpunkts der Kupplung und die Veränderung des Reibwerts der Kupplung durch eine kumulativ durchgeführte Tastpunkt- und Reibwertadaption der Kupplungsmomentenkennlinie berücksichtigt. Dabei kann beispielsweise die Tastpunktverschiebung aus dem langfristig wirkenden energieabhängigen Anteil der Verschiebung der Tellerfederzungen-Nullposition in der oben beschriebenen Weise bestimmt werden. Der kurzfristig wirkende reibleistungsabhängigen Anteil der Verschiebung der Tellerfeder-Nullposition, der bei einem Schlupfbetrieb der Kupplung, beispielsweise während eines Anfahr- oder Schaltvorganges auftritt, kann durch die Reibwertadaption berücksichtigt werden. Dadurch wird eine aufwendige Bestimmung der reibleistungsabhängigen Verschiebung der Tellerfederzungen-Nullposition vermieden werden. Die auf diese Weise durchgeführte Adaption der Kupplungsmomentenkennlinie kann im Kupplungskennliniendiagramm als eine Parallelverschiebung derselben auf der Stellwegachse durch die Tastpunktadaption unter gleichzeitiger Anpassung der Steigung derselben aufgrund der Reibwertadaption veranschaulicht werden. Durch die kumulative Adaption der Parameter Tastpunkt und Reibwert können sowohl die oben dargestellten langfristig wirkenden Effekte als auch die oben genannten kurzzeitig wirkenden Effekte, die zu einer Veränderung des Betriebsverhaltens der Kupplung führen, auf einfache Weise erfasst und die Kupplungsmomentenkennlinie besser an das veränderte Betriebsverhalten der Kupplung angepasst werden. Auf diese Weise werden der Komfort und die Sicherheit bei Betrieb der Kupplung verbessert.

Nach einer anderen vorteilhaften Ausgestaltung des erfindungsgemäßen Verfahrens wird während der Dauer eines vorbestimmten Zeitintervalls der Nullabgleich der Wegmessung in der Betätigungseinrichtung zur Betätigung der Kupplung nicht zugelassen. Bei dem so genannten Schnüffelvorgang findet ein Nullabgleich in der Wegmessung des Betätigungsglieds der Kupplung, mithin des Tastpunkts derselben, an dem so genannten Schnüffelpunkt bei geschlossener Kupplung statt. Bei einem Schlupfbetrieb, bei dem die Kupplung mit einem großen Energieeintrag belastet wird, beispielsweise während eines Anfahr- oder Schaltungsvorgangs, kommt es, wie bereits oben dargestellt, zu einer thermisch-mechanischen Verformung des Kupplungsaggregats mit einer kurzfristigen Verschiebung der Tellerfederzungen-Nullposition bei geschlossener Kupplung. Ein Nullabgleich der Wegmessung der Betätigungseinrichtung der Kupplung in diesem Betriebszustand würde aufgrund der Verschiebung der Tellerfederzungen-Nullposition zu einem fehlerhaften Tastpunkt führen.

Erfindungsgemäß wird daher in zweckmäßiger Weise, der Schnüffelvorgang während und nach den vorgenannten Betriebszuständen der Kupplung für eine gewisse Zeitdauer, beispielsweise einige Sekunden, nicht zuzulassen. Die Zeitdauer des Nichtzulassens des Schnüffelvorgangs kann beispielsweise von der Größe der in die Kupplung eingetragene Reibleistung und/oder Reibenergie gewählt werden. Dadurch kann eine fehlerhafte Tastpunkteinstellung in der Steuereinrichtung zur Steuerung der Betätigungseinrichtung der Kupplung vermieden werden.

In zweckmäßiger Weise beginnt das Zeitintervall mit dem Ende eines Betriebszustands mit Kupplungsschlupfs und endet nach einer vorbestimmten Zeitdauer. Bei einem Betriebszustand mit einer großen thermischen Belastung der Kupplung, beispielsweise bei einem Schlupfbetrieb während eines Anfahr- oder Schaltungsvorgangs tritt die Verschiebung der Tellerfeder-Nullposition aufgrund einer thermisch-mechanischen Verformung des Kupplungsaggregats nicht sofort auf, sondern mit einer gewissen zeitlichen Verzögerung. Solange die Kupplung betätigt wird, beispielsweise bei einem Anfahr- und Schaltungsvorgang, kann aus betriebstechnischen Gründen ein Schnüffelvorgang nicht durchgeführt werden. Erfindungsgemäß beginnt das Zeitintervall daher zweckmäßigerweise mit dem Ende eines Anfahr- oder Schaltungsvorgangs und endet nach einer vorbestimmten Zeitdauer. Die Zeitdauer des Zeitintervalls kann beispielsweise einige Sekunden betragen und kann beispielsweise in Abhängigkeit von der Größe der in die Kupplung eingetragenen Reibleistung und/oder Reibenergie während des Anfahr- oder Schaltungsvorgangs gewählt werden.

Eine vorteilhafte Ausführungsform zur Durchführung des erfindungsgemäßen Verfahrens ist eine Vorrichtung zum Adaptieren des übertragbaren Moments einer Kupplung in einem automatisierten Fahrzeugstrang mit einem über die Kupplung mit einem Schaltgetriebe verbundenen Antriebsmotor, mit einer elektronischen Steuereinrichtung zum Ansteuern einer Kupplungsbetätigungseinrichtung mit einer Steuergröße, in welcher Steuereinrichtung eine Kennlinie abgelegt ist, die ein von der Kupplung übertragbares Moment abhängig von der Steuergröße angibt, welche Steuereinrichtung zum Adaptieren der Kennlinie entsprechend dem erfindungsgemäßen Verfahren ausgebildet ist.

Die Erfindung wird im Folgenden anhand einer schematischen Zeichnung beispielsweise und mit weiteren Einzelheiten erläutert.

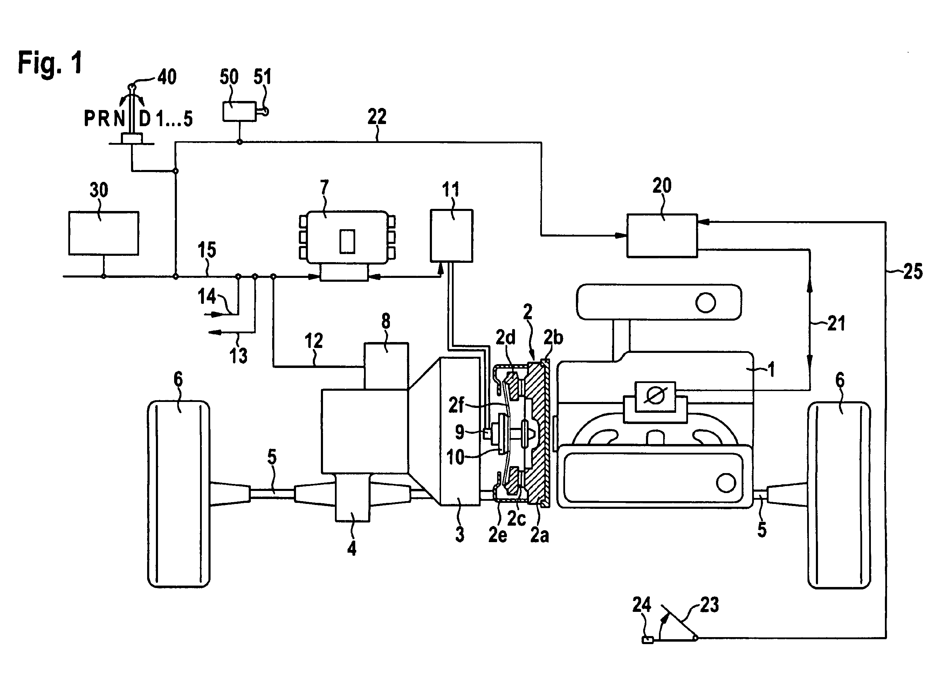

Die Figur 1 zeigt eine schematische Darstellung eines Kraftfahrzeuges mit einem Antriebsmotor 1, wie Verbrennungskraftmaschine, mit einem Drehmomentübertragungssystem 2 und einem Getriebe 3 im Antriebsstrang. Weiterhin ist ein Differential 4, sind Abtriebswellen 5 und von den Abtriebswellen angetriebene Räder 6 dargestellt. An den Rädern können nicht dargestellte Drehzahlsensoren angeordnet sein, welche die Drehzahlen der Räder detektieren. Die Drehzahlsensoren können auch zu anderen Elektronikeinheiten funktional zugehören, wie beispielsweise einem Antiblockiersystem (ABS). Aus zumindest einer Raddrehzahl kann mittels einer Steuereinheit 7 zumindest eine Fahrzeuggeschwindigkeit und/oder eine Getriebedrehzahl bestimmt werden.

Die Antriebseinheit 1, kann auch als Hybridantrieb mit beispielsweise einem Elektromotor, einem Schwungrad mit Freilauf und einer Verbrennungskraftmaschine ausgestaltet sein.

Das Drehmomentübertragungssystem 2 ist als Reibungskupplung ausgestaltet. Die Reibungskupplung kann auch als eine einen Verschleiß nachstellende selbsteinstellende Kupplung ausgebildet sein.

Die Vorrichtung zur automatisierten Betätigung eines Getriebes 3 umfasst eine Steuereinheit 7 und einen von der Steuereinheit 7 ansteuerbaren Aktor 8. Ebenso kann die Steuereinheit 7 einen Aktor 11 ansteuern, zur automatisierten Betätigung des Drehmomentübertragungssystems 2. In der Figur 1 ist eine Steuereinheit 7 und einen schematisch dargestellten Aktor 8 zu erkennen. Die Steuereinheit 7 kann als integrierte Steuereinheit ausgebildet sein, welche die Steuerung oder Regelung beispielsweise des Drehmomentübertragungssystems und des Getriebes durchführt. Weiterhin kann auch eine Motorelektronik in der Steuereinheit integriert sein. Ebenso kann die Ansteuerung des Drehmomentübertragungssystems und des Getriebes, respektive der Aktoren 8,11 zur Betätigung des Drehmomentübertragungssystems und des Getriebes von unterschiedlichen Steuereinheiten durchgeführt werden.

Ebenso ist es möglich, dass die Steuereinheiten von Drehmomentübertragungssystem, Getriebe und/oder Motorsteuerung getrennt angeordnet sind und über Daten- und/oder Signalleitungen miteinander kommunizieren.

Weiterhin stehen die Steuereinheiten oder Elektronikeinheiten mit Sensoren in Signalverbindung, die der Steuereinheit oder den Steuereinheiten die Betriebsparameter des aktuellen Betriebspunktes übermitteln.

Ebenso ist es möglich, dass die Steuereinheit alle benötigten Informationen über Datenleitungen oder einen Datenbus erhält.

Die Steuereinheit 7 ist mit einer Computereinheit ausgestattet um die eingehenden Signale und Systemgrößen empfangen, verarbeiten, abspeichern, abrufen und weiterleiten zu können. Weiterhin generiert die Steuereinheit Steuergrößen und/oder Signale zur Ansteuerung von Aktoren zur Betätigung, sowie zur Weiterleitung an andere Elektronikeinheiten.

Das Drehmomentübertragungssystem 2 ist auf ein Schwungrad 2a montiert oder mit diesem verbunden. Das Schwungrad kann als einteiliges Schwungrad oder als geteiltes Schwungrad mit Primärmasse und Sekundärmasse ausgestaltet sein, wobei zwischen den Einzelschwungmassen, wie beispielsweise zwischen der Primärmasse und der Sekundärmasse, eine Torsionsschwingungsdämpfungseinrichtung angeordnet ist. Weiterhin kann ein Anlasserzahnkranz 2b an dem Schwungrad angeordnet sein. Die Kupplung weist eine Kupplungsscheibe 2c mit Reibbelägen und eine Druckplatte 2d sowie ein Kupplungsdeckel 2e und eine Tellerfeder 2f auf. Die selbsteinstellende Kupplung weist zusätzlich noch Mittel auf, welche eine Verstellung und ein Verschleißnachstellung erlauben, wobei ein Sensor, wie Kraft- oder Wegsensor vorhanden ist, welcher eine Situation detektiert, in welcher eine Nachstellung aufgrund beispielsweise von Verschleiß notwendig ist und bei einer Detektion auch selbsttätig durchgeführt wird.

Das Drehmomentübertragungssystem wird mittels eines Ausrückers 9 beispielsweise mit einem Ausrücklager 10 betätigt. Die Steuereinheit 7 steuert den Aktor 11 an, welcher die Betätigung der Kupplung durchführt. Die Betätigung des Ausrückers kann elektromotorisch, elektrohydraulisch, wie beispielsweise druckmittelbetätigt, wie hydraulisch oder mittels eines anderen Betätigungsmechanismus erfolgen. Der Ausrücker 9 mit Ausrücklager 10 kann als Zentralausrücker ausgebildet sein, der koaxial zur Getriebeeingangswelle angeordnet ist und mittels Beaufschlagung beispielsweise der Tellerfederzungen der Kupplung die Kupplung ein- und ausgerückt. Der Ausrücker kann aber auch als mechanischer Ausrücker ausgestaltet sein, welcher ein Ausrücklager oder ein vergleichbares Element betätigt, beaufschlagt oder bedient.

Der Aktor 8 betätigt insbesondere mit seinem zumindest einen Ausgangs- oder Betätigungselement oder mit mehreren Ausgangs- oder Betätigungselementen das Getriebe 3 zum Schalten und/oder Wählen. Die Ansteuerung der Schaft und/oder Wählbetätigung hängt von der Bauart des Getriebes ab.

Es sind insbesondere Getriebe mit einer zentralen Schaltwelle zu betrachten, bei welchen ein Schalt- oder Wählvorgang durch eine axiale Betätigung oder eine Betätigung in Umfangsrichtung der zentralen Schaltwelle, respektive umgekehrt erfolgt. Ein Aktor betätigt beispielsweise mit einem Betätigungselement die axiale Betätigung der zentralen Schaltwelle und mit einem anderen Betätigungselement die Betätigung der Welle in Umfangsrichtung. Dabei kann die Schaltbewegung in Umfangsrichtung erfolgen und die Wählbetätigung in axialer Richtung oder umgekehrt.

Weiterhin sind Getriebe mit zwei Wellen zu betrachten, bei welchen jeweils eine Welle zum Schalten und einer Welle zum Wählen der Getriebeübersetzung vorhanden sind, wobei beide Wellen in Umfangsrichtung betätigt werden um einen Schaltvorgang oder einen Wählvorgang durchzuführen.

Ebenso sind Getriebe mit Schaltstangen zu betrachten, bei welchen die Schaltstangen in axialer Richtung betätigt werden um mit einem Schaltvorgang eine Getriebeübersetzung zu schalten, wobei ein Wählvorgang durch die Auswahl der betätigten Schaltstange erfolgt.

Die Wellen oder Schaltstangen stellen getriebeinterne Schaltelemente dar oder die Wellen betätigen solche innerhalb des Getriebes bei einer Betätigung. Der Aktor 8 betätigt direkt oder indirekt getriebeinterne Schaltelemente zum Einlegen, Herausnehmen oder Wechseln von Gangstufen oder Übersetzungsstufen, wie eine zentrale Schaltwelle, Wellen oder Schaltstangen oder andere Schaltelemente.

Die Steuereinheit 7 ist über die Signalverbindung 12 mit dem Aktor 8 verbunden, so dass Steuersignale und/oder Sensorsignale oder Betriebszustandssignale ausgetauscht, weitergeleitet oder abgefragt werden können. Weiterhin stehen die Signalverbindung 13 und 14 zur Verfügung, über welche die Steuereinheit mit weiteren Sensoren oder Elektronikeinheiten zumindest zeitweise in Signalverbindung stehen. Solche anderen Elektronikeinheiten können beispielsweise die Motorelektronik, eine Antiblockiersystemelektronik oder eine Antischlupfregelungselektronik sein. Weitere Sensoren können Sensoren sein, die allgemein den Betriebszustand des Fahrzeuges charakterisieren oder detektieren, wie zum Beispiel Drehzahlsensoren des Motors oder von Rädern, Drosselklappenstellungssensoren, Gaspedalstellungssensoren oder andere Sensoren. Die Signalverbindung 15 stellt eine Verbindung zu einem Datenbus her, wie beispielsweise CAN-Bus, über welchen Systemdaten des Fahrzeuges oder anderer Elektronikeinheiten zur Verfügung gestellt werden können, da die Elektronikeinheiten in der Regel durch Computereinheiten miteinander vernetzt sind.

Ein automatisiertes Getriebe kann derart geschaltet werden oder einen Gangwechsel erfahren, dass dies von dem Fahrer des Fahrzeuges initiiert wird, in dem er mittels beispielsweise eines Schalters, eines Tasters oder einer anderen Getriebewahleinrichtung 40 ein Signal zum herauf- oder herunterschalten gibt. Weiterhin könnte auch ein Signal zur Wahl des nächsten einzulegenden Gangs gegeben werden. Entsprechend kann auch mittels eines elektronischen Schalthebels ein Signal zur Verfügung gestellt werden, in welchen Gang das Getriebe schalten soll.

In einem anderen Getriebeprogramm kann eine automatisierte Betätigung des Getriebes gewählt werden, so dass die Wahl des aktuellen Gangs in Abhängigkeit von den Betriebsparametern durchgeführt wird und gegebenenfalls ein Schaltvorgang automatisiert eingeleitet wird. Ein automatisiertes Getriebe kann aber auch mittels beispielsweise Kennwerten, Kennlinien oder Kennfeldern und auf der Basis von Sensorsignalen bei gewissen vorbestimmten Punkten einen Gangwechsel selbständig durchführen, ohne dass der Fahrer einen Gangwechsel veranlassen muss.

Weiterhin kann beispielsweise eine Neutralposition N eingestellt werden, in welcher keine Antriebsverbindung zwischen Getriebeeingang und Getriebeausgang vorliegt. Weiterhin kann eine Parkstellung P gewählt werden, in welcher eine Parksperre realisiert wird. Diese Parkstellung kann auch automatisch gewählt werden, wenn beispielsweise der Zündschlüssel 51 aus dem Zündschloss abgezogen wird und der Betriebszustand des Fahrzeuges dies erlaubt. Beispielsweise sei ein Abziehen des Zündschlüssels bei hohen Geschwindigkeiten genannt, wobei in dieser Situation eine Parksperre nicht automatisiert eingelegt werden sollte.

Die Getriebewahleinheit 40 kann somit auf einen Bereich M, wie manuelle fahrerseitige Gangwahl, einen Bereich D, wie automatische Gangwahl zum Fahrbetrieb, einen Bereich P, wie Parksperre, und/oder einen Bereich N, wie Neutralstellung, eingestellt werden. Weiterhin kann über beispielsweise Schalter oder einen Hebel ein manuelles Schalten eingeleitet werden.

Das Fahrzeug ist vorzugsweise mit einem elektronischen Gaspedal 23 oder Lasthebel ausgestattet, wobei das Gaspedal 23 einen Sensor 24 ansteuert, mittels welchem die Motorelektronik 20 beispielsweise die Kraftstoffzufuhr, Zündzeitpunkt, Einspritzzeit oder die Drosselklappenstellung über die Signalleitung 21 des Motors 1 steuert oder regelt. Das elektronische Gaspedal 23 mit Sensor 24 ist über die Signalleitung 25 mit der Motorelektronik 20 signalverbunden. Die Motorelektronik 20 ist über die Signalleitung 22 mit der Steuereinheit 7 in Signalverbindung. Weiterhin kann auch eine Getriebesteuerelektronik 30 in Signalverbindung mit den Einheiten 7 und 20 stehen. Eine elektromotorische Drosselklappensteuerung ist hierfür zweckmäßig, wobei die Position der Drosselklappe mittels der Motorelektronik angesteuert wird. Bei solchen Systemen ist eine direkte mechanische Verbindung zum Gaspedal nicht mehr notwendig oder zweckmäßig.

Das Fahrzeug verfügt weiterhin über eine Motorstarteinrichtung 50, welche ausgehend von einem fahrerseitigen Motorstartversuch mittels beispielsweise einer Betätigung des Zündschlüssels 51 im Zündschloss eine Motorelektronik und einen Anlasser ansteuert zum Starten und/oder Anlassen des Motors.

## Patentansprüche

1. Verfahren zum Adaptieren einer in einer elektronischen Steuereinrichtung abgelegten Beziehung zwischen einem von einer Kupplung übertragbaren Moment und einer Steuergröße zum Steuern einer Betätigungseinrichtung der Kupplung, welche Kupplung in einem automatisierten Fahrzeugantriebsstrang im Kraftfluss zwischen einem Antriebsmotor und einem Schaltgetriebe angeordnet ist, bei welchem Verfahren aus mindestens einem Adaptionsparameter das von der Kupplung übertragbare Moment berechnet und der Steuergröße als aktualisiertes übertragbares Moment zugeordnet wird, wobei als ein Adaptionsparameter eine Verschiebung eines Tastpunktes der Kupplung verwendet wird, **dadurch gekennzeichnet, dass** die Verschiebung des Tastpunktes in Abhängigkeit von der in die Kupplung eingebrachten Reibleistung näherungsweise berechnet wird und sich aus dem Produkt einer Proportionalitätskonstanten multipliziert mit der Größe der in die Kupplung eingebrachten Reibleistung und multipliziert mit einem Zeitfilterungsglied, ergibt.

2. Verfahren nach Anspruch 1, **dadurch gekennzeichnet, dass** der Adaptionsparameter in Abhängigkeit eines Anstiegs der Temperatur der Kupplung während eines bestimmten Zeitintervalls näherungsweise berechnet wird.

3. Verfahren nach Anspruch 1, **dadurch gekennzeichnet, dass** der Adaptionsparameter in Abhängigkeit des Anstiegs der Temperatur der Kupplung während eines bestimmten Zeitintervalls und in Abhängigkeit von der in die Kupplung eingebrachten Reibleistung näherungsweise berechnet wird.

4. Verfahren nach Anspruch 1, **dadurch gekennzeichnet, dass** als Adaptionsparameter der Reibwert der Kupplung verwendet wird.

5. Verfahren nach einem der Ansprüche 1 oder 4, **dadurch gekennzeichnet, dass** der Adaptionsparameter durch Auswertung des mechanischen Momentengleichgewichts an der Kupplung bestimmt wird.

6. Verfahren nach einem der Ansprüche 4 oder 5, **dadurch gekennzeichnet, dass** als Adaptionsparameter ein kurzfristiger Reibwert der Kupplung und ein langfristiger Reibwert der Kupplung verwendet werden.

7. Verfahren nach Anspruch 6, **dadurch gekennzeichnet, dass** bei einem Schlupfbetrieb der Kupplung der kurzfristige Reibwert und bei Betriebszuständen außerhalb des genannten Betriebszustands der langfristige Reibwert als Adaptionsparameter verwendet wird.

8. Verfahren nach Anspruch 7, **dadurch gekennzeichnet, dass** der Übergang zwischen der Phase mit der Verwendung des kurzfristigen Reibwerts der Kupplung als Adaptionsparameter und der Phase mit der Verwendung des langfristigen Reibwerts der Kupplung als Adaptionsparameter schrittweise kontinuierlich gestaltet wird.

9. Verfahren nach einem der Ansprüche 1 bis 8, **dadurch gekennzeichnet, dass** als Adaptionsparameter der Tastpunkt der Kupplung und der Reibwert der Kupplung verwendet werden.

10. Verfahren nach einem der Ansprüche 1 bis 9, **dadurch gekennzeichnet, dass** während der Dauer eines vorbestimmten Zeitintervalls der Nullabgleich der Wegmessung der Betätigungseinrichtung zum Betätigen der Kupplung nicht zugelassen wird.

11. Verfahren nach Anspruch 10, **dadurch gekennzeichnet, dass** das Zeitintervall beginnt mit dem Ende eines Betriebszustands mit Kupplungsschlupf und nach einer vorbestimmten Zeitdauer endet.

12. Vorrichtung zum Adaptieren des übertragbaren Moments einer Kupplung in einem automatisierten Fahrzeugstrang mit einem über die Kupplung mit einem Schaltgetriebe verbundenen Antriebsmotor, mit einer elektronischen Steuereinrichtung zum Ansteuern einer Kupplungsbetätigungseinrichtung mit einer Steuergröße, in welcher Steuereinrichtung eine Kennlinie abgelegt ist, die ein von der Kupplung übertragbares Moment abhängig von der Steuergröße angibt, welche Steuereinrichtung zum Adaptieren der Kennlinie entsprechend dem Verfahren nach einem der Ansprüche 1 bis 11 ausgebildet ist.

## Claims

1. A method for adapting a relationship, stored in an electronic control device, between a torque that is transmittable by a clutch and a control variable for controlling an actuating device of the clutch, which clutch is positioned in an automated vehicle power train in the power flow between a drive engine and a gear-shifting transmission, in which method the torque transmittable by the clutch is calculated from at least one adaptation parameter and is assigned to the control variable as the updated transmittable torque, where a shifting of a keying point of the clutch is used as an adaptation parameter, **characterized in that** the shifting of the keying point is calculated approximately as a function of the frictional power introduced into the clutch, and is derived from the product of a proportionality constant multiplied by the value of the frictional power introduced into the clutch and multiplied by a time filtering element.

2. A method according to Claim 1, **characterized in that** the adaptation parameter is calculated approximately as a function of a rise in the temperature of the clutch during a certain time interval.

3. A method according to Claim 1, **characterized in that** the adaptation parameter is calculated approximately as a function of the rise in the temperature of the clutch during a certain time interval and as a function of the frictional power introduced into the clutch.

4. A method according to Claim 1, **characterized in that** the coefficient of friction of the clutch is used as an adaptation parameter.

5. A method according to one of Claims 1 to 4, **characterized in that** the adaptation parameter is determined by evaluating the mechanical torque equilibrium at the clutch.

6. A method according to one of Claims 4 or 5, **characterized in that** a short-term coefficient of friction of the clutch and a long-term coefficient of friction of the clutch are used as adaptation parameters.

7. A method according to Claim 6, **characterized in that** when the clutch is slipping the short-term coefficient of friction is used as an adaptation parameter, and under operating conditions outside of the named operating condition the long-term coefficient of friction is used.

8. A method according to Claim 7, **characterized in that** the transition between the phase that uses the short-term coefficient of friction of the clutch as an adaptation parameter and the phase that uses the long-term coefficient of transmission of the clutch as an adaptation parameter is designed as a continuous sequence of steps.

9. A method according to one of Claims 1 to 8, **characterized in that** the keying point of the clutch and the coefficient of friction of the clutch are used as adaptation parameters.

10. A method according to one of Claims 1 to 9, **characterized in that** for the duration of a predetermined time interval zeroing of the displacement measurement of the actuating device to actuate the clutch is not permitted.

11. A method according to Claim 10, **characterized in that** the time interval begins at the end of an operating state with clutch slippage and ends after a predetermined period of time.

12. A device for adapting the transmittable torque of a clutch in an automated vehicle power train having a drive engine that is connected to a gear-shifting transmission through the clutch, with an electronic control device for operating a clutch actuating device with a control variable, in which control device a characteristic curve is stored that specifies a torque transmittable by the clutch as a function of the control variable, which control device is designed to adapt the characteristic curve in accordance with the method according to one of Claims 1 to 11.

## Revendications

1. Procédé pour adapter un rapport, mémorisé dans un dispositif de commande électronique, entre un moment transmissible par un embrayage et une grandeur de commande destinée à commander un dispositif d'actionnement de l'embrayage, lequel embrayage est disposé dans une ligne de commande automatisée de véhicule dans le flux de force entre un moteur d'entraînement et une boîte de vitesses, dans lequel procédé le moment transmissible par l'embrayage est calculé à partir d'au moins un paramètre d'adaptation et est attribué à la grandeur de commande comme moment transmissible actualisé, un déplacement d'un point de contact de l'embrayage étant utilisé comme paramètre d'adaptation, **caractérisé en ce que** le déplacement du point de contact est calculé de manière approximative en fonction de la puissance de friction appliquée dans l'embrayage et qu'il résulte du produit d'une constante de proportionnalité multipliée par la grandeur de la puissance de friction appliquée dans le couplage et multipliée par un membre de filtrage temporel.

2. Procédé selon la revendication 1, **caractérisé en ce que** le paramètre d'adaptation est calculé de manière approximative en fonction d'une augmentation de la température de l'embrayage pendant un intervalle de temps défini.

3. Procédé selon la revendication 1, **caractérisé en ce que** le paramètre d'adaptation est calculé de manière approximative en fonction de l'augmentation de la température de l'embrayage pendant un intervalle de temps défini et en fonction de la puissance de friction appliquée dans l'embrayage.

4. Procédé selon la revendication 1, **caractérisé en ce que** la valeur de friction de l'embrayage est utilisée comme paramètre d'adaptation.

5. Procédé selon l'une des revendications 1 ou 4, **caractérisé en ce que** le paramètre d'adaptation est défini par évaluation de l'équilibre mécanique des moments sur l'embrayage.

6. Procédé selon l'une des revendications 4 ou 5, **caractérisé en ce qu'**une valeur de friction à court terme de l'embrayage et une valeur de friction à long terme de l'embrayage sont utilisées comme paramètres d'adaptation.

7. Procédé selon la revendication 6, **caractérisé en ce qu'**en cas d'un fonctionnement de l'embrayage en glissement, la valeur de friction à court terme est utilisée comme paramètre d'adaptation et qu'en cas d'états de fonctionnement en dehors de l'état de fonctionnement mentionné, la valeur de friction à long terme est utilisée.

8. Procédé selon la revendication 7, **caractérisé en ce que** la transition entre la phase où la valeur de friction à court terme de l'embrayage est utilisée comme paramètre d'adaptation et la phase où la valeur de friction à long terme de l'embrayage est utilisée comme paramètre d'adaptation,est réalisée en continu, pas à pas.

9. Procédé selon l'une quelconque des revendications 1 à 8, **caractérisé en ce que** le point de contact de l'embrayage et la valeur de friction de l'embrayage sont utilisés comme paramètres d'adaptation.

10. Procédé selon l'une quelconque des revendications 1 à 9, **caractérisé en ce que**, pendant la durée d'un intervalle de temps prédéfini, la compensation à zéro de la mesure de trajectoire du dispositif de commande n'est pas permise pour actionner l'embrayage.

11. Procédé selon la revendication 10, **caractérisé en ce que** l'intervalle de temps commence à la fin d'un état de fonctionnement avec glissement de l'embrayage et qu'il se termine après une durée prédéterminée.

12. Dispositif pour adapter le moment transmis d'un embrayage dans une ligne de véhicule automatique comprenant un moteur d'entraînement raccordé à une boîte de vitesses par l'intermédiaire de l'embrayage, comprenant un dispositif de commande électronique pour commander un dispositif d'actionnement d'embrayage au moyen d'une grandeur de commande, dans lequel dispositif de commande est mémorisée une caractéristique qui indique un moment transmissible par l'embrayage en fonction de la grandeur de commande, lequel dispositif de commande, pour adapter la caractéristique, est exécuté de manière correspondant au procédé selon l'une quelconque des revendications 1 à 11.
